Europäisches Patentamt

European Patent Office

Office européen des brevets

(11) Publication number: **0 169 736**
**A1**

## (12) EUROPEAN PATENT APPLICATION

(21) Application number: **85305274.4**

(22) Date of filing: **24.07.85**

(51) Int. Cl.⁴: **B 23 P 6/00**

(30) Priority: **24.07.84 GB 8418842**

(43) Date of publication of application:
**29.01.86 Bulletin 86/5**

(84) Designated Contracting States:
**AT BE CH DE FR GB IT LI NL SE**

(71) Applicant: **Blagden Industries PLC**
**16-18 Hatton Garden**
**London EC1N 8FJ(GB)**

(72) Inventor: **Simpson, John c/o Victor Blagden (Barking)**
**Limited**
**Gascoigne Wharf Alfred's Way**
**Barking Essex IG11 0AU(GB)**

(74) Representative: **Smith, Geoffrey Leonard et al,**
**Marks & Clerk Friars House 6 - 10 Parkway**
**Chelmsford Essex CM2 0NF(GB)**

(54) **Drum reconditioning.**

(57) In a drum reconditioning process a drum 1 is removed from the drum body 2 by cutting through the drum end at a point 10 in the outer circumferential wall of the seam 16. Preferably, a second cut is made at point 7 in the drum body to remove the remaining seam portion 17 from the body. The drum end 1 and the original or a like body 2 are then reconnected by rolling the J-shaped flange formed on the drum end 1 against the end 5 of the drum body and welding at 12. A band of material 14 prevents welding of the drum body to the inner flange wall 13, enhancing the performance of the reconditioned drum in drop-testing.

FIG.2a.

FIG.4b.

EP 0 169 736 A1

P48234EP

## DRUM RECONDITIONING.

This invention relates to drums and in particular to a method and apparatus for reusing an end of a closed end or tight-head drum.

The invention is particularly concerned with 45 gallon or 210 litre metal drums. Many such drums are reusable after undergoing a cleaning and refurbishing process. With tight-head drums there is only very limited access to the inside of the drum for cleaning, making it difficult to clean properly drums which have contained material which cannot readily be washed out, such as some paints etc. To perform efficient cleaning an end of the drum is cut off so that the inside of the drum can be cleaned, for example by incinerating and shot-blasting, and a new end is fitted to the drum.

A tight-head drum can be converted to an open head drum, the old end being usable as a lid, however there is a demand for reconditioned tight-head drums.

Existing methods of replacing drum ends on tight head drums require the use of a new drum end and also result in shortening of the drum length, as part of the drum body is incorporated in a newly formed rolled seam. A drum may be reconditioned several times during its lifetime, but the resultant reduction in length may result in the drum falling below 45 gallons or 210 litres, rendering the drum useless for commercial purposes. Also, a shortened drum will lead to difficulties when stacking on pallets alongside new, full length drums.

--2--

The present invention provides a process for removing and reusing a drum end of a drum having a said drum end attached to a drum body by a rolled seam, characterised in that a cut is made through the material of the drum end forming part of the seam to detach the drum end from the body, seam forming material remaining on the drum end after cutting, and the detached end is attached to the open or opened end of a drum body by rolling the seam forming material against the end of the drum body to form a second seam.

By cutting to leave seam forming material on the drum end, the drum end can be reused. on a tight head drum. The drum end may be attached to a drum body from which the drum end has been removed in the defined manner. The drum end may be adhered to the drum body to form a leak tight seam,preferably by welding at the outer circumference. When the original seam has been formed with a rubberised compound, the compound may bubble or boil off during welding, adversely affecting the weld. Accordingly, it is preferred that any seam forming material remaining on the drum body be removed before attaching the drum end thereto.

The circumfrential edge of the drum end will have a substantially J-shaped cross-section. The open end of drum body is received within the crook of the J-shaped portion which is then rolled or squeezed tight against the drum body end, which remains cylindrical, and the edge of the seam portion is welded to the drum body.

Very preferably a metal band is positioned between the inner surface of the drum body and the drum end before forming and welding the seam, to prevent welding of the inner surface of the drum body and the adjacent wall of the drum end . However, when the seam forming material has been left on the end of the drum body, the metal band may not be required.

A second aspect of the invention comprises a method of attaching a drum end to a drum body, comprising forming at the circumference of the drum end a flange comprising inner and outer concentric cylindrical flange portions joined at one end by an annular flange portion, positioning the end of the drum body between the cylindrical flange portions and welding the outer cylindrical flange portion to the drum body.

Preferably a band of material is positioned between the drum body and the inner cylindrical flange portion to prevent welding thereof. Preferably the flange has a substantially J-shaped cross-section. In the case of metal drums, the band is preferably of metal, e.g. steel. Preferably the welding is such that the band is at least spot welded to the drum body.

Prior to joining the body and end, the band may be held in place by spot welding to the drum body, or it may be held in place by gravity and/or as a push fit in or on one of the members. The band is preferably of substantially the same thickness as the material of the drum body and end.

The invention will be further described by way of example, with reference to the accompanying drawings, in which

Figure 1 is a flow chart showing a tight-head drum reconditioning process;

Figures 2a and 2b are cross-sectional views showing different types of join between an end and drum wall of a tight-head drum;

Figures 3a and 3b illustrate a method of cutting off a drum end, according to the invention,

Figures 4a, 4b and 4c show the formation of a join between a drum end and drum wall in a reconditioned drum according to the invention.

-- 4 --

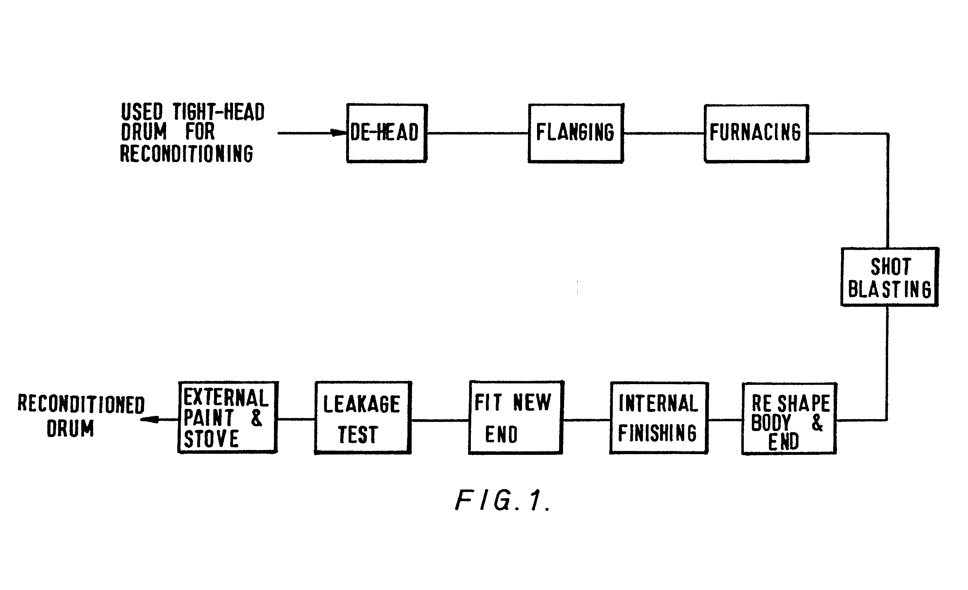

Figure 1 shows a tight-head steel drum reconditioning process. An end, usually the head, of a used drum is removed. In the prior art reconditioning process, a flange is then formed on the open end of the drum wall for later attachment of a new drum head. Thereafter the drum is cleaned, for example by furnacing and shot-blasting. The cleaned drum is reshaped, for example the remaining chime may be straightened and the body rolled to remove major dents to ensure that the drum is up to maximum capacity. The open-ended drum may then be sprayed internally with a protective lacquer, if corrosive materials are to be transported in the drum. A new end is then fitted (double-seamed) to the drum and the completed drum tested for leaks and given an external coat of paint.

The top end or head of a new drum will have a filling hole or holes, which may be formed by inserts in the drum end. These inserts are generally sealed to the drum by a rubber washer or the like, in which case the top end would normally be removed when a furnacing step is used, since the rubber washers would be burnt away.

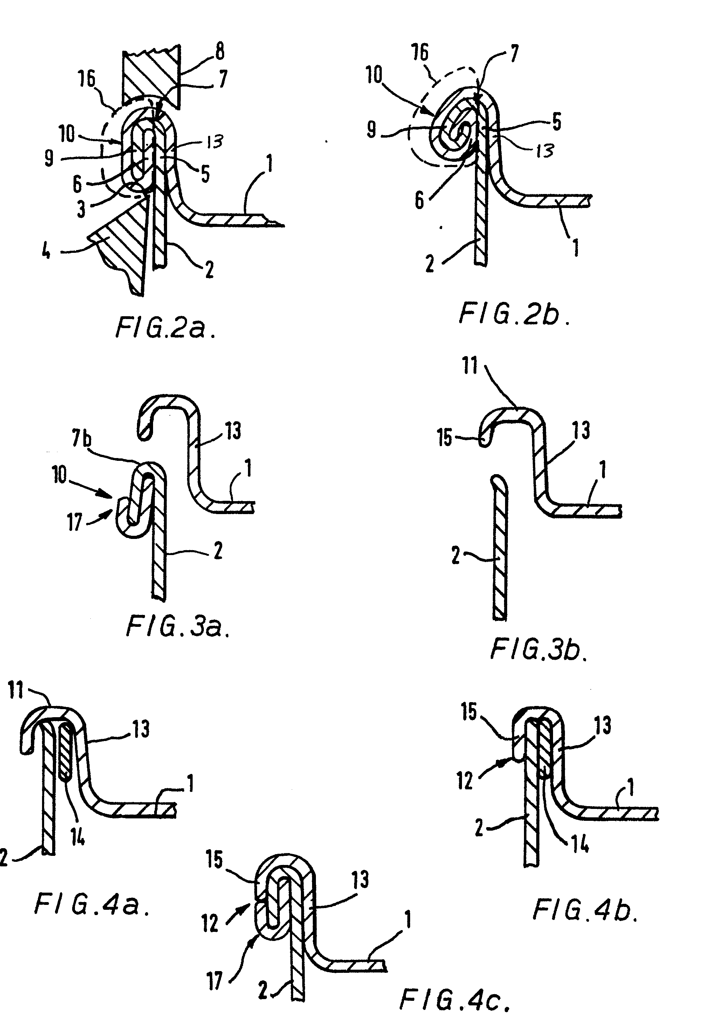

Figures 2a and 2b illustrate existing types of join between an end 1 and the body 2 on a new drum. Figure 2a illustrates a double seam join, and Figure 2b a round seam join. Both seams 16 are formed by rolling together flanges on the drum body 2 and drum end 1, a rubberised compound being squirted into the seam when forming the join to ensure a leak-tight seal. A radially outwardly extending flange is formed on the end of the drum body 2. The edge of the drum end 1 is formed with an upwardly extending cylindrical wall 13 which is finished with a radially outwardly extending flange portion. The drum end 1 is placed on the drum body 2 and the outwardly extending flange portions are then rolled together to form a seam as shown in Figs. 2a and 2b. Other shapes of seam may be rolled as is known in the art, and the number of turns forming the seam may be increased, for example as in a triple rolled seam.

Similar types of join will usually be formed at the top and bottoms ends of the drum.

In the prior art method of drum reconditioning the drum head is removed by means of a rolling wedge 4 having a cutting edge 3.(fig 2a). The wedge 4 is forced between the drum wall portion 5 and the adjacent turn 6 of the drum head 1, and cuts the drum wall at its uppermost point, indicated by arrow 7, a pulley wheel or roller 8 supports the upper surface of the seam 16. The wedge 4 and roller 8 are rolled around the circumferential edge of the drum to make a complete cut. After the cut the drum head 1 may be lifted off, carrying with it the seam turn or turns 9 of the drum body 2 which are entrained in the rolled seam.

The removed end maybe used to form a lid for an open topped drum.

To fit the drum body with a new drum end it is necessary to form an outwardly extending flange on the body end, having the length of the lost portion 9, which flange is rolled with a new drum end in the manner of fitting a new end on a new drum as described above. Hence, it can be seem that the drum body is shortened by a significant amount which may be sufficient to take it below the required nett volume particularly if an end were being replaced for a second time.

A method of reusing the drum end for a tight head drum and avoiding shortening of the drum body in accordance with the present invention will now be described.

In place of the single cut at the point 7, in the prior art method, a cut is made through the material of the drum end 1 forming the seam 16, in the region of the point 10, shown in figures 2a and 2b,that is at the outer circumference of the seam 16, preferably at about the mid-height of the seam 16. This can be made by a simple cutting edge rolled against the seam, the inner wall of the seam being supported. The cutting edge will score the portion 9 of the drum body 1, however this is not significant. After the cut the end 1 may be removed from the body, Figure 3a.

Optionally, a second cut is then made, at the point 7, to remove the remaining seam portion 17 from the body end. If the prior art cutting method is used for this cut, a dummy drum end may be used to prevent the wedge 4 bearing against the roller 8, alternatively the roller may be designed to receive the cutting edge 3. Other forms of cutting may be employed, for example plasma cutting. After the second cut the drum body end produced will be as for the prior art method.

The second cut is particularly desirable where the seam portion remaining on the body incorporates a sealing compound, since the compound may gas or boil off during welding, impairing the weld and the seal formed by the seam.

The drum end 1 is then re- fitted to the drum body 2 or to a like drum body 2. Figures 4a and 4b show the case where the seam portion remaining on the drum body has been removed (Figure 3b). However the seam portion may be left in position, so that the reformed seam will have the same general cross-section as the original seam, see Figure 4c.

The curved flange 11 on the end 1 is rolled against the straight drum body wall, Figure 4b, or against the remaining seam portion on the drum body Figure 4c. The drum end is then fixed in position by welding, for example using mixed gas welding, around the circumference of the seam at point 12 to weld the flange portion 15 to the drum body or remaining seam portion 17.

When welding it has been found that the drum body wall may be welded to the inner, upwardly extending, flange portion 13 of the drum end. This is particularly the case where the remaining seam portion has been removed from the drum body, i.e. as shown in Figure 4b. Whilst this does not affect the seal between the drum body and replaced end, it has been found to produce a weakened seam. If the drum is drop-tested onto the seam, the seam may tear in the region of the weld to cylindrical wall 13.

Accordingly, a particularly preferred feature of the invention is to insert a band 14 between the wall 13 and drum wall 2. Band 14 is of steel, preferably of the same thickness as the drum material, generally about 1mm., and is suffcient to prevent welding to the wall 13. Band 14 will be held in place after the seam is compressed and rolled, but it is preferable that the welding conditions are such as to result in at least a partial weld between band 14 and the drum body 2.

The band 14 may be held in place by gravity prior to rolling the seam and welding, e.g. by keeping the seam upside down with respect to that shown in the drawings. The band 14 may be a push fit onto the drum end, around the inner cylindrical flange position 13 or in the end 5 of the drum body. The band 14 may be spot welded into position prior to forming the seam.

The depth of the band 14 is about twice the depth of the outer, cylindrical vertical flange portion 15. It has been found that drums welded in this fashion, with the band 14, meet existing international drop-test specifications.

When a drum is reconditioned more than once, it is preferred to remove the top end of the drum on first reconditioning, the inserts to the filling holes being welded to the drum top end at this stage. At the second reconditioning of the drum, the bottom end can be removed, since all the remaining drum seams are welded and so able to withstand furnacing during the cleaning operation.

It will be appreciated that the method of attaching the drum end by welding is applicable to processes using a new drum body and/or end, although forming rolled double or round seams is considered to be less costly than welding. A particular advantage of the present invention is its use in reconditioning, whereby the need for a new drum end and shortening of the drum body is avoided.

CLAIMS

1. A process for removing and reusing a drum end (1) of a drum having a said drum end(1) attached to a drum body (2) by a rolled seam (16)characterised in that a cut is made through the material of the drum end forming part of the seam(16) to detach the drum end(1) from the body(2), seam forming material(11,13,15) remaining on the drum end after cutting, and the detached end(1) is attached to the open or opened end of a drum body(2) by rolling the seam forming material against the end of the drum body (2) to form a second seam

2. A process as claimed in claim 1, characterised in that the drum end(1) is cut at the outer circumferential surface(10) of the seam(16) and the second seam is welded.

3. A process as claimed in claim 1 or 2, characterised in that the seam forming material(11,13,15) remaining on the drum end(1) has a substantially J-shaped cross -section, and the end of the drum body(2) is received within the crook of the J-shaped cross-section.

4. A process as claimed in claim 3, characterised in that a band of material(14) is positioned between the inner surface of the drum body (2) and the seam forming portion(13) of the drum end before forming and welding the seam.

5. A process as claimed in claim 4, characterised in that the drum body (2) to which the said drum end (1) is to be attached is a drum body(2) from which the or a like drum end(1) has been detached in the manner defined.

6. A process as claimed in claim 5, characterised in that any seam portion(17) remaining on the drum body after the said cut is cut from the drum body.

7.  Apparatus for performing the method of claim 1, comprising means for cutting through the material of the drum end(1) forming part of the seam to leave an outer circumferential part(15) of the seam forming material on the drum end(1) and means attaching the drum end(1) onto a drum body(2).

8.  A method of attaching a drum end(1) to a drum body,(2) comprising forming at the circumference of the drum end(1) a flange comprising inner and outer concentric cylindrical flange portions(13,15) joined at one end by an annular flange portion(10), positioning the end of the drum body(2) between the cylindrical flange portions(13,15) and adhering the outer cylindrical flange portion(13) to the drum body(2).

9. A method as claimed in claim 8 wherein when the drum end is adhered to the drum body by welding.

10.  A method as claimed in claim 9, in which a band of material is positioned between the drum body and the cylindrical flange to prevent welding thereof.

USED TIGHT-HEAD DRUM FOR RECONDITIONING → DE-HEAD → FLANGING → FURNACING → SHOT BLASTING → RESHAPE BODY & END → INTERNAL FINISHING → FIT NEW END → LEAKAGE TEST → EXTERNAL PAINT & STOVE → RECONDITIONED DRUM

FIG.1.

FIG.2a.

FIG.2b.

FIG.3a.

FIG.3b.

FIG.4a.

FIG.4b.

FIG.4c.

## DOCUMENTS CONSIDERED TO BE RELEVANT

EP 85305274.4

| Category | Citation of document with indication, where appropriate, of relevant passages | Relevant to claim | CLASSIFICATION OF THE APPLICATION (Int. Cl.4) |
|---|---|---|---|
| X | US - A - 2 943 386 (KATZ)<br>* Column 1, line 64 - column 2, line 17; column 4, lines 26-44; column 6, line 61 - column 7, line 36; fig. 4,4A,5, 9,10 * | 1,7 | B 23 P 6/00 |
| Y | | 2,5,6 | |
| Y | DE - C - 900 445 (RAUTERT)<br>* Page 2, lines 79-89; fig. * | 2,5,6 | |
| A | | 3 | |
| A | US - A - 2 576 767 (A'HEARN)<br>* Column 2, lines 39-44 * | 4,10 | |
| X | US - A - 1 613 449 (FORGEY et al.)<br>* Fig. 2,4 * | 8 | TECHNICAL FIELDS SEARCHED (Int. Cl.4) |
| A | PATENT ABSTRACTS OF JAPAN; unexamined applications, M section, vol. 4, no. 120, August 26, 1980<br>THE PATENT OFFICE JAPANESE GOVERNMENT,<br>page 46 M 28<br>* Kokai-no. 55-77 428 (ASAHI YOUKI KOGYO K.K.) *<br><br>& JP-A2-55-77 428 (ASAHI YOUKI KOGYO K.K.)<br>* Fig. 1,3,4 * | 1,5,6, 7 | B 21 D 1/00<br>B 21 D 51/00<br>B 23 P 6/00 |

The present search report has been drawn up for all claims

| Place of search | Date of completion of the search | Examiner |
|---|---|---|
| VIENNA | 18-10-1985 | TROJAN |

**EUROPEAN SEARCH REPORT**

European Patent Office

## DOCUMENTS CONSIDERED TO BE RELEVANT

EP 85305274.4

| Category | Citation of document with indication, where appropriate, of relevant passages | Relevant to claim | CLASSIFICATION OF THE APPLICATION (Int. Cl.4) |
|---|---|---|---|
| A | <u>AT - B - 322 337</u> (KONINKLIJKE EM-BALLAGE INDUSTRIE VAN LEER B.V.) <br> * page 2, lines 29-32,50,51; fig. 1-4 * | | |
| A | <u>GB - A - 2 052 321</u> (KEG SERVICES LIMITED) <br> * Totality * | | |

TECHNICAL FIELDS SEARCHED (Int. Cl.4)

The present search report has been drawn up for all claims

| Place of search | Date of completion of the search | Examiner |
|---|---|---|
| VIENNA | 18-10-1985 | TROJAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82